(19) Europäisches Patentamt
European Patent Office
Office européen des brevets

(11) Publication number: **0 446 391 A1**

# (12) EUROPEAN PATENT APPLICATION

(21) Application number: **90104787.8**

(22) Date of filing: **14.03.90**

(51) Int. Cl.$^5$: **C08L 95/00**, C09D 195/00, E01C 7/24, //(C08L95/00,53:02)

(43) Date of publication of application: **18.09.91 Bulletin 91/38**

(84) Designated Contracting States: **AT BE DE DK ES FR GB IT NL SE**

(71) Applicant: **THE DOW CHEMICAL COMPANY**
**2030 Dow Center Abbott Road P.O. Box 1967**
**Midland Michigan 48640-1967(US)**

(72) Inventor: **Vitkuske, John F.**
**1800 McGregor**
**Midland, Michigan 48640(US)**
Inventor: **Pelletier, Ronald R.**
**1820 Rapanos**
**Midland, Michigan 48640(US)**
Inventor: **Tung, Lu Ho**
**19 Kingwood Road**
**Oakland, California 94619(US)**
Inventor: **Snyder, Ronald E.**
**3 Robin Court**
**Midland, Michigan 48640(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**

## (54) Bituminous binder compositions.

(57) A bituminous binder composition and method of making the composition are taught which composition has improved toughness and elasticity. The blend contains a bituminous binder material and a tapered A-B-A type block copolymer wherein the tapered copolymer is formed from a monovinyl aromatic compound and a conjugated diene.

EP 0 446 391 A1

The use of petroleum residuum or bituminous binder materials, such as asphalt, as a component of paving materials, crack sealants, chip sealants, roofing materials and the like is well known. It is also well known that the physical properties of such bituminous binders can be modified by blending, with asphalt, for example, various polymeric materials, such as polyethylene, and elastomers, such as styrene-butadiene-styrene block copolymers.

It would be desirable to provide bituminous binder compositions, such as asphalt blends, that have improved toughness and elasticity when compared to known blends.

The present invention is a bituminous binder composition comprising a bituminous binder and a tapered block copolymer of the A-B-A type, wherein the A block is formed from a monovinyl aromatic compound and the B block is formed from a conjugated diene compound and a tapered copolymer of the conjugated diene and the monovinyl aromatic compound, wherein up to 100 percent of the B block may be formed of said tapered copolymer, whereby the toughness and elasticity of the bituminous binder composition is improved. A "tapered" A-B-A block copolymer is a block copolymer wherein the B block contains a gradual and continuous change of composition from A rich to B rich and then back to A rich, as compared with an essentially pure A block connected directly to an essentially pure B block or where the B block becomes A rich toward only one of the A blocks. This can be referred to as a A-t-B-t-A configuration versus an entirely pure block copolymers configuration e.g., A-B or A-B-A or only one sided tapered block copolymers e.g., A-t-B-A or A-t-B.

The present invention also comprises a bituminous binder composition that is a blend of a bituminous binder aqueous emulsion and a tapered block copolymer of the A-B-A type as described above, wherein said tapered block copolymer is also in aqueous emulsion form.

The composition of the tapered block copolymer of the invention preferably comprises 5 to 50 weight percent of the polymerized monovinyl aromatic portion and 50 to 95 weight percent of the polymerized diene portion. The copolymer composition of the invention preferably comprises 1 to 20 weight percent of said tapered block copolymer based upon the weights of the bituminous binder and copolymer.

The invention further comprises a method for forming a bituminous binder composition comprising blending a bituminous binder or asphalt at an elevated temperature with at least one styrenic diene block copolymer of the A-B-A type wherein the A block is formed from a monovinyl aromatic compound and the B block is formed from a conjugated diene compound and a tapered copolymer of the conjugated diene and the monovinyl aromatic compound. Up to 100 percent of the B block may be formed of said copolymer in tapered form which improves the toughness and elasticity of the composition.

In a preferred embodiment of the invention, a method for preparing the bituminous binder composition of the invention includes blending an aqueous bituminous binder emulsion with an aqueous emulsion of a tapered styrene diene copolymer, followed by removing the aqueous phase.

The bituminous binder material employed in the practice of the present invention is not critical. Any bitumen, asphalt or crude residuum can be employed. In general, the asphalts which can be employed include conventional petroleum asphalts, natural asphalts, gilsonite, air blown asphalts, coal tar and other similar materials. U.S. Patent 3,317,447 describes useful bituminous binder materials. Suitable asphalts are characterized, for example, by grades having penetration numbers of up to 300 as measured by ASTM Method D5. Suitable asphalts are also characterized by a viscosity grading method, as defined and measured by ASTM 2171 as, for example, AC2.5, AC5, AC10, AC20, AC30 and AC40. AC indicates asphalt cement and the number indicates viscosity at 140°F (60°C) in poise divided by 100. Preferred asphalts are those with an AC grade of 40 or less, or penetration numbers of 30 or more. The choice of the bituminous binder will depend on the application for which the blend composition is to be used.

The bituminous binder or asphalt component may be blended in an emulsion form. As is well known in the art, the asphalt emulsion is prepared, for example, by blending water, asphalt and a suitable emulsifying agent. Various methods for preparing such asphalt emulsions are taught, for example, in U.S. Patent Nos. 4,547,224; 4,494,992; 4,478,642; 4,222,916; 4,209,337; 3,933,710; and 3,867,162.

The monovinyl aromatic (or styrenic) diene block copolymer comprises a tapered block copolymer of an A-t-B-t-A configuration. Preferably the copolymer contains 5 to 50 weight percent of the monovinyl aromatic polymeric portion (preferably 15 to 40 percent) and 95 to 50 weight percent of the polymeric diene portion (preferably 85 to 60 percent).

The A block comprises a polymer formed from a monovinyl aromatic monomer of the formula:

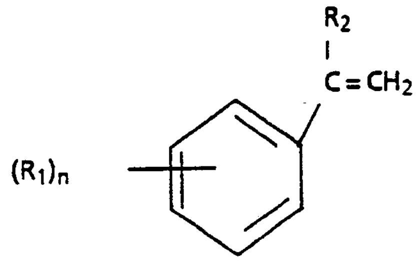

wherein n is an integer of 0 to 3, $R_1$ are, individually, alkyl radicals containing up to 5 carbon atoms and $R_2$ is H-, $CH_3$- or mixtures thereof. Such compounds include styrene, α-methylstyrene, vinyl toluene (all isomers alone or in admixture), ethylstyrene, dimethylstyrene, trimethylstyrene, tertiary butylstyrene, tertiary amylstyrene, and isopropylstyrene.

The B block may comprise a polymer formed from a conjugated diene of 4 to 5 carbon atoms, for example, butadiene, isoprene, cis- or trans- 1,3-pentadiene, copolymers of two or more dienes such as butadiene and isoprene and block copolymers of two or more dienes such as butadiene and isoprene. A portion, up to 100 percent, of the B block comprises a copolymer of the above-described monovinyl aromatic monomers and conjugated dienes, said portion representing the tapered portion of the block copolymer.

The tapered block copolymer has a molecular weight of 10,000 to 1,000,000. Preferably, for reasons of better performance and handling, the molecular weight is 50,000 to 500,000, as determined by gel permeation chromatography. Particular tapered block copolymers which are useful herein are those taught in U.S. Patents 4,427,837; 4,431,777; 4,172,190 and 4,196,154.

The tapered block copolymer may be blended in the composition of the invention in emulsion form. Emulsions of block copolymer solutions in water can be prepared by either direct or inverse emulsification techniques. Emulsions may be, for example, conveniently prepared from cyclohexane or toluene solutions containing 10 to 15 percent by weight polymer and using 2 to 5 percent surfactant by weight based on polymer. Other solvents may also be employed. Suitable anionic surfactants are, for example, Aerosol OT®, Alipal® CO436, Triton® R770 and mixtures (at about 3 to 1) of Siponate® DS10 (or Calsoft® L40) and Triton® X100 or similar nonionic surfactant. Quaternary ammonium based surfactants such as dodecyltrimethyl ammonium chloride and similar species (including ethoxolated versions) may be used to prepare cationically stabilized emulsions. Best results are often achieved by premixing the surfactant into the polymer solution and then combining with water. For the inversion process, about one volume of water is added at a moderate rate to the polymer-surfactant mixture with continuous moderate agitation, first forming a water-in-oil emulsion which usually inverts to an oil-in-water emulsion when about one half volume of water has been added. If a solvent-free dispersion is desired, the solvent may be removed via azeotropic distillation and the resulting latex concentrated to 50 percent or higher solids e.g. by simply distilling out more water.

In the direct emulsification procedure, the polymer solution-surfactant mixture is added to about an equal volume of water with high shear mixing (e.g. Gifford-Wood Homogenizer Mixer) forming the oil-in-water emulsion directly. High shear mixing is continued for a few moments after completion of addition or, alternately, emulsion may be passed through a colloid mill. Solvent-free concentrated latex can be prepared as described above.

Other emulsion forms of the block copolymer are taught in U.S. Patents 3,238,172; 3,592,788; 3,565,842; 3,577,250; 3,936,406; 3,957,524; 3,988,275; 4,002,412 and 4,443,084.

The emulsion-emulsion composition blend is prepared by mild mixing of the copolymer emulsion into the asphalt emulsion at the normal storage temperature (e.g. 50 °C to 85 °C) of the asphalt emulsion for a time sufficient to provide adequate homogeneity of the blend. Alternatively, the emulsified copolymer can be mixed with the surfactant employed to emulsify the asphalt and this mix is then emulsified with the asphalt employing known emulsification techniques.

In non-emulsion blending, the mixing of the tapered block copolymer and the bitumen takes place under such conditions that assure excellent homogeneity. The blending or mixing temperature is usually between 130 °C and 200 °C so that the components are sufficiently fluid. Furthermore, the mixture must be maintained under agitation for a time sufficient to assure uniform dispersion of the tapered block copolymer into the bitumen. Normally less than 2 hours is sufficient dependent on the physical form of the tapered block copolymer, temperature and mixing intensity. Equipment normally used for heating and mixing materials into asphalt can be employed. In addition to traditional forms such as pellets, crumb or powder

the block copolymer can be dissolved in a solvent, such as hydrocarbon, and then blended or may be used in the form of an emulsion. In either case the solvent and water are normally evaporated off during the blending procedure.

The bituminous binder material and the tapered block copolymer are blended together to provide, preferably, 1 to 20 weight percent (most preferably 2 to 10 percent) of the block copolymer, based upon the weight of bituminous material and copolymer. The blend may contain other optional components usually employed in such materials, such as fillers, aggregates, sulfur and the like.

The bitumen block copolymer emulsion blend compositions of the invention may be used for pavement (roadways, airport runways, sidewalks and the like) seal coats, crack sealants, chip seals, slurry seals and the like. In paving applications the binder or composition of the invention have a reduced tendency to rot at elevated temperatures. Slurry seals comprise a slurry mixture of the asphalt emulsion described herein and an aggregate such as sand or gravel which is used to pave a surface. The water in the slurry is permitted to evaporate after application as a pavement component. They are advantageous because they have a reduced tendency to flush and bleed at elevated temperatures. They can also be used at lower temperatures because of their reduced tendency to crack and ravel. They are very elastic and provide good chip adhesion and retention in chip seal applications. Because of the blend's good elasticity and high plasticity intorval, they also find use as industrial coatings and other industrial uses such as coverings, felts, shingles, paints, and water proofing applications, such as automotive undercoatings and the like. For example, for use as a pavement the emulsion blend is spread on a surface as an emulsion and the aqueous phase is removed by evaporation. As a chip seal (e.g. ground aggregate etc.) an emulsion blend of the invention is spread on a road surface, chips are laid in the emulsion and the aqueous phase is removed by evaporation, such as by natural evaporation.

The following examples are provided:

## Example 1

### Procedure A

To a nitrogen purged 2 liter air-tight stirred reactor, 1400 mL purified toluene was added. To the same vessel, 230 mL of purified 1,3-butadiene and 80.6 mL of purified styrene were added. A 60 mL quantity of this reaction mixture was withdrawn from the reaction vessel and titrated with a toluene solution of 1,3-phenylene-bis(3-methyl-1-phenylpentylidene)-bis(lithium), a difunctional organolithium initiator prepared as in U.S. Patent 4,196,154, until a faint reddish color appeared. Based on the equivalency of the difunctional initiator used in the titration, an equivalent amount of s-butyllithium solution was added to the reaction mixture to blank out the impurities. The reaction mixture in the reactor was then heated to 50°C and 1.78 millimoles of the above difunctional organo-lithium initiator solution was added to initiate the polymerization of butadiene. The temperature of the reaction mixture rose to about 80°C in about 45 minutes after initiation. Shortly thereafter the faint yellowing solution turned to a more intense red color indicating that styrene polymerization had started. A second rise in temperature to 84°C was observed. Afterwards the temperature started to subside. The polymerization was allowed to proceed for 30 minutes after the color change and then was terminated by the addition of isopropyl alcohol. The recovered block copolymer was a tapered SBS triblock copolymer. A small portion of the polymer was recovered from the toluene solution for the molecular weight determination by gel permeation chromatography (GPC) (employing Millipore-Waters 150C instrument with 6 TSK columns). The molecular weight at the peak of the distribution as determined by GPC was 133,000. The polymer based on the feed used has 67 percent by weight butadiene and 33 percent by weight styrene.

### Procedure B

The procedure used was similar to that of Procedure A with the exception that isopropoxide was used as a coinitiator together with the initiator used in preparing Polymer A. The molecular weight distribution of the block copolymer made is narrower than the block copolymer made without the isopropoxide. The polymer had a molecular weight of 150,000 at the peak of the GPC chromatogram and the Mw/Mn ratio for the block copolymer was 1.08. The isopropoxide was generated in situ by the reaction of isopropanol (isopropyl alcohol) with the blanking s-butyllithium. The 1/10 isopropanol/toluene was made in a 10 mL volumetric flask with 1 mL isopropanol and toluene of sufficient quantity to make up the 10 mL volume. The concentration was therefore 1.31 N. The amount of isopropoxide generated was 1.35 milliequivalents.

Procedure C

In making a tapered block polymer the same conditions were used as those in Procedure A except that after the polymerization the reactive anions were carefully terminated by adding isopropyl alcohol dropwise until the red polystyryl anion color just disappeared. A 100 mL portion of syrup was withdrawn from the reactor for analysis. Afterwards another 230 mL of butadiene and 80.6 mL of styrene were added and the polymerization was repeated. The final syrup was saved and combined with another syrup made in exactly the same manner. The final polymer was a tapered SBS with a molecular weight of 131,000. The styrene content was 33 percent by weight and butadiene 67 percent.

Mixing Various Forms of Copolymer with Asphalt

The procedures of A-C were employed to make various tapered block copolymers having different molecular weights and styrene content. The tapered block copolymers were added in various forms to an asphalt (Marathon AC-10; 85-100 penetration number) and various characteristics of the binder composition blend determined. The tapered block polymer was added as a solution in toluene, as solid particles and as an anionio emulsion in water. The solution form consisted of the tapered block copolymer in toluene as formed in the polymerization reaction. The emulsion was formed by adding an anionic surfactant and water to the toluene solution of the tapered block copolymer and emulsifying the blend by running it through a collodial mill or high shear mixer. The toluene in the emulsion was then steam stripped under a vacuum and then the emulsion was concentrated to greater than 50 percent by weight solids. Solid tapered block copolymer was formed by drying the toluene solution in a vacuum oven and cutting the solid tapered block copolymer into pellets.

The tapered block copolymer was mixed with the asphalt by thoroughly blending the solution, solid, or emulsion with the asphalt while at a temperature of 130°C to 140°C and then continuing the mixing at an elevated temperature of 185°C to 190°C for 1 to 2 hours to evaporate all toluene and water as the case may be. The modified asphalt was then cast into test strips and subjected to one or more of the below described tests. The results are set forth in the following Tables I(a) and I(b).

A. Percent elongation was measured on an Instron test machine at a temperature of - 10°C and 4°C at a pull rate of 0.1 inch/minute and 2 inches/minute, (0.25 to 5.08 cm/min) respectively. The results of these tests are identified in the Table as Elongation (%). The test is similar to the ductility test except the results are determined with the Instron machine instead of a ductilometer.

B. Tensile strength (psi) was determined by using data obtained using an Instron Model No. 1125 instrument.

C. Ductility (cm) was determined according to ASSHTO Method T51-81. This test measures the distance a sample will elongate before breaking when two ends of a briquet sample are pulled apart at a specified speed and temperature. The data set forth in the following table often reports the high and low values determined for a number of test specimens. It is not unusual for such variance in results employing this test procedure.

D. Elastic recovery (%) was determined by measuring the amount of recovery after 10 centimeters extension in the ductility test.

E. Toughness and tenacity (in/lbs) was measured using the Benson test (test proposed by J. R. Benson, Consulting Bituminous Engineer of Denver, Colorado in 1955, reported in Utah State Specifications for Rubberized Asphalt). This test indicates the toughness of the modified asphalt as measured by the inch-pounds of work required to separate a tension head and cup holding the sample in the test apparatus.

F. Torsional recovery (%) is the test known in the art as California test 332 (CT 332). This test measures the amount of elasticity that is imparted to an asphalt residuum that was treated with an elastomeric latex or emulsion.

TABLE I(a)

| Test # | Polymer-ization Procedure | Mol. Wt. At GPC Peak | Weight av. Mol Wt. | % STY | Wt % Polymer in Asphalt | Form of Polymer | Tensile Properties -10°C @ 0.1 inch/min | | Tensile Properties 4°C @ 2 inch/min | |
|---|---|---|---|---|---|---|---|---|---|---|
| | | | | | | | Ty (psi) | Elonga-tion % | Ty (psi) | Elonga-tion % |
| 1 | C | 131,000 | 151,000 | 33 | 5 | solution | 300 | NB | 90 | NB |
| 2 | A | 133,000 | 146,000 | 33 | 5 | solution | 350 | NB | 90 | NB |
| 3 | C | 131,000 | 151,000 | 33 | 5 | emulsion | 600 | NB | 200 | NB |
| 4 | A | 137,000 | 130,000 | 33 | 5 | pellets | 200 | NB | | |
| 5 | A | 123,000 | 133,000 | 33 | 5 | pellets | 45 | NB | | |
| 25A* | none | - | - | - | 0 | - | 100 | 0.3 | 200 | 25 |
| 26B* | Kraton 1101 | 110,000 | - | 31 | 5 | solution | 475 | 1.5 | 275 | NB |
| 27C* | Modified A** | 130,000 | 135,000 | 30 | 5 | solution | 475 | 16 | 120 | NB |

NB = did not break at limit of test equipment -1400 cm
* Comparitive Examples - not examples of the invention
** Non tapered SBS made similar to procedure A except that styrene was added after completion of butadiene polymerization

TABLE I(b)

| Test # | Polymer-ization Procedure | Mol Wt at GPC Peak | Weight Av Mol Wt | % STY | Wt % Polymer in Asphalt | Form of Polymer | Ductility (cm) | Elastic Recovery % | Toughness/-Tenacity (lbs/sq in)-in |
|---|---|---|---|---|---|---|---|---|---|
| 6 | A | 135,000 | 151,000 | 33 | 5 | solution | 24-74 | - | |
| 8 | A | 220,000 | 237,000 | 33 | 5 | solution | 53.5-56 | - | |
| 10,11,16 | A | 133,000 | 146,000 | 33 | 5 | solution | 83.5-132.5 | - | |
| 12 | A | 123,000 | 133,000 | 33 | 5 | solution | 6.35-73 | - | |
| 13 | A | 137,000 | 132,000 | 25 | 5 | solution | 64-75 | - | |
| 14 | A | 137,000 | 130,000 | 33 | 5 | solution | 52-54 | - | |
| 15 | C | 131,000 | 151,000 | 33 | 5 | solution | 72-87 | - | |
| 17 | C | 131,000 | 151,000 | 33 | 5 | emulsion | 72-81 | - | |
| 18 | C | 131,000 | 151,000 | 33 | 5 | powder | 53-55 | - | |
| 19 | A | 160,000 | 182,000 | 33 | 3 | emulsion | 35.4 | 63.3 | 201/150 |
| 20 | B | 150,000 | 153,000 | 33 | 3 | emulsion | 29.6 | 65.0 | 168/113 |
| 21 | A | 146,000 | 160,000 | 33 | 3 | emulsion | 28.5 | 62.5 | 132/88 |
| 22 | A | 204,000 | 266,000 | 33 | 3 | emulsion | 48.8 | 67.5 | 241/176 |
| 23 | A | 154,000 | 190,000 | 38 | 3 | emulsion | 27.6 | 67.5 | 239/178 |
| 24 | A | 171,000 | 217,000 | 28 | 3 | emulsion | 34.6 | 65.0 | 171/119 |

Referring to Table 1(a), tests 25A, 26B and 27C are comparative examples which do not employ tapered blocks copolymer of the invention. Comparative 25A is 100 percent Marathon AC-10 asphalt. Comparative 26B employs a commercial non-tapered SBS triblock polymer. Comparative 27C is an untapered SBS triblock produced generally by procedure A, described above, with the principal exception that the stytrene was added to the polymerization mixture after the butadiene monomer was consumed resulting in a wholly untapered SBS triblock. The results demonstrate that the tapered SBS component

imparts high elongation characterization to the composition of the invention at a small sacrifice of tensile strength, in comparision with untapered SBS triblocks. High elongation implies that the resulting asphalt is more resistant to fracture under strain. Table I(b) provides formulations of additional binder compositions of the invention in solution or emulsion forms.

Example 2

Mixing Polymer Emulsions with Asphalt Emulsions

The procedures A and B of Example 1, were employed to make various tapered block copolymers having different molecular weights and styrene content. The tapered block copolymers in emulsion form were added in various amounts to an asphalt emulsion and various characteristics of the blend determined. The tapered block polymer emulsion was formed by adding an anionic, nonionic or cationic surfactant and water to the toluene solution of the tapered block copolymer and emulsifying the blend by running it through a colloidal mill or high shear mixer. The toluene in the emulsion was then steam stripped under a vacuum and the emulsion was concentrated to greater than 50 percent by weight solids.

Other copolymer emulsions were also tested. One comprised an emulsion of Kraton® D1101, a commercial styrene-butadiene-styrene copolymer marketed by Shell Oil Company. The polymer is a pure non-tapered triblock which is taught in the Shell literature to contain 31 percent by weight of styrene and 69 percent butadiene. The Kraton® D1101 styrene-butadiene-styrene block copolymer was emulsified by dissolving the polymer in toluene to form a 12 percent by weight solution of the polymer. Then 5.2 grams of a 58 percent active anionic surfactant (Alipal® CO436) was added to one kilogram of the polymer solution and sheared in a Gifford Wood Homogenizer Mixer to provide a uniform mixture of the polymer solution and surfactant. While continuing mixing, 350 cc of an aqueous solution containing 0.1 percent of the surfactant was slowly added to the toluene solution. The addition was stopped after each 50 cc addition to assure uniform mixing. The temperature eventually reached 70°C and the emulsion became too viscous to be efficiently mixed. Additional water (60 cc) was added to reduce the viscosity and rinse the mixer head. The resulting oil-in-water emulsion was stripped of toluene and concentrated to a total weight of 211 grams under reduced pressure using a rotating evaporator. Polyethylene was added to control foaming during stripping. The resulting emulsion contained 64.5 percent solids by weight. The particle size was determined to be 2.44 micrometers (volume mean diameter using a Coulter Counter with 19 micron aperture). Kraton® 1107 emulsion was prepared in a similar manner.

The specific block copolymer emulsions were mixed with the asphalt emulsions by thoroughly blending the emulsion with the asphalt emulsions while at a temperature of about 65°C with continual mixing. The asphalt residuum was recovered from the emulsion using standard procedures described in AASHTO-T-59 Testing procedures. The recovered modified asphalt was then cast into test bars and subjected to one or more of the above-described tests. The results are set forth in the following Table II.

TABLE II

| Test No. | Copolymer Emulsion | Type of Emulsion | Percent Copolymer in Blend (wt %)*** | Mw at Peak | Wt. Ave. Mol. Wt. | % Styrene | Elastic Recovery % | Torsional Recovery % |
|---|---|---|---|---|---|---|---|---|
| 1 | Kraton® D-1101 SBS** | anionic | 3 | 110,000 | | 31* | 68-70 | 11-14 |
| 2 | Tapered SBS procedure A | anionic | 3 | 146,000 | 160,000 | 33 | 70 | 25.7 |
| 3 | Tapered SBS procedure A | anionic | 3 | 160,000 | 182,000 | 33 | 70 | 26.1 |
| 4 | Tapered SBS procedure A | anionic | 3 | 204,000 | 266,000 | 33 | 70 | 23.4 |
| 5 | Tapered SBS procedure A | anionic | 3 | 154,000 | 190,000 | 38 | 72.5 | 17.6 |
| 6 | Tapered SBS procedure A | anionic | 3 | 171,000 | 217,000 | 28 | 70 | 17.2 |
| 7 | Tapered SBS procedure B | anionic | 3 | 150,000 | 153,000 | 33 | 70 | 18.9 |
| A | None (Marathon AC10 alone) | - | - | - | - | - | 0 | 0 |

*Shell Chemical Company Publication SC:68-87
**Nontapered block copolymer - not an example of the invention
***Based upon the weight of bituminous binder and copolymer

Example 3

A typical SBS copolymer having a GPC peak molecular weight of 225 M is prepared according to procedure A of Example 1. A toluene solution containing 10 percent by weight of the SBS copolymer is prepared. Also prepared is a 62 percent solids aqueous emulsion of the SBS copolymer. These solutions and emulsions are mixed with Ergon asphalt supplied by Lion Oil Company of Arkansas having a 200 penetration and a 39 °C softening point.

The toluene solution is added slowly to a number of Ergon asphalt samples which are stirred at 110 to 120 °C to form test samples having SBS contents ranging from 0 to 6 percent by weight. During addition over ½ to 2 hours (depending upon amount added) temperatures are 160 to 165 °C, evaporating about one-half the toluene. The samples are finally heated in a vacuum oven at 188 °C to remove the balance of the

toluene. The samples are then tested to measure toughness and tenacity. The results are reported in Table III.

In preparing the emulsion-based compositions, the emulsion is added dropwise to impeller stirred asphalt heated to 160 to 170 °C to form test samples having SBS contents changing from 6 to 16 percent by weight. The temperature during mixing dropped to 130 to 140 °C due to water evaporation. The temperature was increased eventually to 180 °C and the samples finished in the vacuum oven at 165 °C for 1½ hours, followed by remixing and 2 more hours in the oven. The resulting samples are tested for toughness and tenacity with the results appearing in Table III.

TABLE III

| Test No. | Description of Sample | % SBS based on SBS + asphalt | To[1] | Te[2] |
|---|---|---|---|---|
| A | 10% SBS solution in toluene | 1 | 33 | 28 |
| B | 10% SBS solution in toluene | 2 | 58 | 49 |
| C | 10% SBS solution in toluene | 6 | 99 | 93 |
| Control | Ergon asphalt alone | 0 | 18.5 | 13 |
| C1 | 62% SBS solids/aqueous-emulsion | 6 | 99 | 83 |
| D1 | 62% SBS solids/aqueous-emulsion | 10 | 162 | 141 |
| E1 | 62% SBS solids/aqueous-emulsion | 16 | 194 | * |

1To = <u>Toughness</u>: The entire area of a stress-strain curve obtained on a ductilometer at 4°C and 5 cm/min. pull rate. ASTM D113.

2Te = <u>Tenacity</u>: The area under the stress-strain curve attributable to elastomer modifier SBS.

*No yield point on stress-strain curve.

## Claims

1. A bituminous binder composition, comprising:

a bituminous binder; and

a tapered block copolymer of the A-B-A type wherein the A block is a monovinyl aromatic compound and the B block is a conjugated diene and a tapered copolymer of the conjugated diene and the monovinyl aromatic compound, wherein up to 100 percent of the B block may be formed of said tapered copolymer.

2. The bituminous binder of Claim 1 wherein said bituminous binder and said tapered block copolymer are in aqueous emulsion form.

3. The composition of Claim 1 or 2 wherein the tapered block copolymer comprises 5 to 50 weight percent of said polymerized monovinyl aromatic compound and 50 to 95 weight percent of said polymerized diene compound.

4. The composition of Claim 1 or 2 wherein the monovinyl aromatic polymer compound is formed from a monomer of the formula:

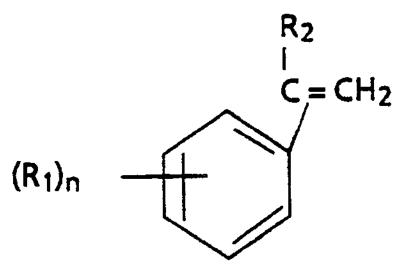

wherein n is an integer of 0 to 3, R is, individually, an alkyl radical containing up to 5 carbon atoms, and $R_2$ is H-, $CH_3$- or mixtures thereof.

5. The composition of Claim 1 or 2 wherein the diene polymer compound comprises a polymer formed from one or more conjugated dienes of 4 to 5 carbon atoms and copolymers of the polymerization of said monovinyl aromatic monomer and a conjugated diene monomer.

6. The composition of Claim 4 wherein the monovinyl aromatic diene block copolymer has a molecular weight of 10,000 to 1,000,000.

7. The composition of Claim 6 wherein the monovinyl aromatic compound is styrene, α-methylstyrene or a mixture thereof.

8. The composition of Claim 5, wherein the diene is butadiene or isoprene.

9. The composition of Claim 1 wherein the tapered block copolymer is composed of styrene and butadiene.

10. The composition of Claim 1 wherein said copolymer comprises 1 to 20 weight percent of said composition, based upon the weights of the bituminous binder and copolymer.

11. A method for forming a bituminous binder composition, comprising: blending a bituminous binder at an elevated temperature with a tapered block copolymer of the A-B-A type, wherein the A block is formed from a monovinyl aromatic compound and the B block is formed from a conjugated diene and a tapered copolymer of the conjugated diene and the monovinyl aromatic compound wherein up to 100 percent of the B block may be formed of said tapered copolymer.

12. The method of Claim 11, further comprising:

forming said bituminous binder and said tapered block copolymer into separate aqueous emulsions;

blending said aqueous bituminous binder emulsion with said tapered block copolymer aqueous emulsion; and

removing the aqueous phase from said composition.

**13.** The method of Claim 11 or 12 wherein the monovinyl aromatic diene block copolymer comprises 5 to 50 weight percent of said polymerized monovinyl aromatic compound and 50 to 95 weight percent of said polymerized diene compound.

**14.** The method of Claim 13 wherein the monovinyl aromatic polymer compound is formed from a monomer of the formula:

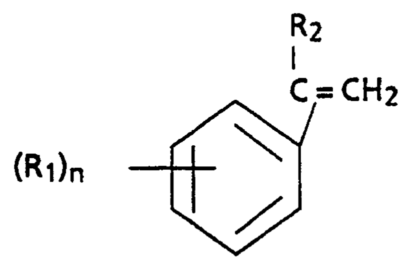

wherein n is an integer of 0 to 3, R is, individually, an alkyl radical containing up to 5 carbon atoms, and $R_2$ is H-, $CH_3$- or mixtures thereof.

**15.** The method of Claim 13 wherein the diene polymer compound comprises a polymer formed from one or more conjugated dienes of 4 to 5 carbon atoms and copolymers of the polymerization of said monovinyl aromatic monomer and a conjugated diene monomer.

**16.** The method of Claim 11 or 12 wherein the block copolymer has a molecular weight of about 10,000 to about 1,000,000.

**17.** The method of Claim 12 wherein 1 to 20 weight percent of the block copolymer emulsion is blended with the bituminous emulsion.

**18.** The method of Claim 12 wherein the diene is butadiene or isoprene and the monovinyl aromatic compound is styrene or α-methylstyrene.

**19.** The method of Claim 11 wherein the tapered block copolymer is an aqueous emulsion.

**20.** The method of Claim 11 or 12 wherein the bituminous binder is asphalt.

**21.** A method for using the composition of Claim 1 or 2 in preparation of a pavement comprising spreading said composition on a load bearing surface and removing the aqueous phase by evaporation.

**22.** The method of Claim 21 further comprising blending an aggregate into the composition of Claim 1 to form a slurry prior to said spreading step.

**23.** A method for using the composition of Claim 2 for waterproofing a metal surface which comprises applying said composition to a metal surface and evaporating off the aqueous phase of the emulsion.

**24.** A method for using the composition of Claim 2 for a roofing material which comprises applying said composition to a roof and evaporating off the aqueous phase of the emulsion.

European Patent Office

# EUROPEAN SEARCH REPORT

Application Number

EP 90 10 4787

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 125 444 (SHELL)<br>* Claims 1-8,17 *<br>- - - | 1-10,21 | C 08 L 95/00<br>C 09 D 195/00<br>E 01 C 7/24 //<br>(C 08 L 95/00<br>C 08 L 53:02 ) |
| A | US-A-3 565 842 (A.C. PITCHFORD)<br>* Claims; column 7, lines 23-28 *<br>- - - | 1-10,21 | |
| A,D | US-A-4 172 190 (L.H. TUNG)<br>- - - - - | | |

TECHNICAL FIELDS SEARCHED (Int. Cl.5)

C 08 L 95/00

The present search report has been drawn up for all claims

| Place of search | Date of completion of search | Examiner |
|---|---|---|
| The Hague | 14 November 90 | GIRARD Y.A. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document